# EUROPÄISCHE PATENTANMELDUNG

(11) **EP 2 589 859 A1**
(43) Veröffentlichungstag der Anmeldung: **08.05.2013**
(21) Anmeldenummer: 11187438.4
(22) Anmeldetag: 02.11.2011
(51) Int. Cl.: F21V 14/02, B60Q 1/26, F21S 8/12

(54) **Kraftfahrzeugleuchte**

(71) Anmelder: odelo GmbH, 71409 Schwaikheim (DE)
(72) Erfinder: Vollmer, Marco, 71332 Waiblingen (DE)
(74) Vertreter: Benninger, Johannes

(57) **Zusammenfassung**

Es wird eine Kraftfahrzeugleuchte (01) mit einem von einem Leuchtengehäuse und einer Lichtscheibe umschlossenen Leuchteninnenraum beschrieben. In dem Leuchteninnenraum sind wenigstens ein Reflektor (02) und ein Leuchtmittel (03) mit mindestens einer Lichtquelle (04) beherbergt. In dem Reflektor (02) ist mindestens eine Aussparung (05) als Lampenloch für wenigstens eine Lichtquelle (04) des Leuchtmittels (03) vorgesehen. Dabei ist:
- eine die Aussparung (05) nachbildende Abdeckung (06) vorgesehen,
- die Lichtquelle (04) mit Blick auf die der Lichtscheibe zugewandte Vorderseite (07) des Reflektors (02) gesehen hinter der Abdeckung (06) angeordnet,
- zumindest die Abdeckung (06) in Richtung einer Bewegungsbahn zumindest zwischen einem einem Kaltzustand der Kraftfahrzeugleuchte (01) mit ausgeschaltetem Leuchtmittel (03) entsprechenden ersten Zustand und einem einem Warmzustand der Kraftfahrzeugleuchte (01) mit eingeschaltetem Leuchtmittel (03) entsprechenden zweiten Zustand relativ zum Reflektor (02) beweglich angeordnet.

In dem ersten Zustand schließt die Abdeckung (06) die Aussparung (05) im Reflektor (02) ab. In dem zweiten Zustand gibt die Abdeckung (06) die Aussparung (05) frei und befindet sich beim Blick auf die Vorderseite (07) des Reflektors (02) vor der vom Reflektor (02) begrenzten Aussparung (05).

## Beschreibung

Die Erfindung betrifft eine Kraftfahrzeugleuchte gemäß dem Oberbegriff des Anspruchs 1.

Eine Kraftfahrzeugleuchte umfasst im Wesentlichen einen von einem Leuchtengehäuse und einer Lichtscheibe umschlossenen Leuchteninnenraum und mindestens ein darin beherbergtes Leuchtmittel für wenigstens eine Lichtfunktion der Kraftfahrzeugleuchte. In dem Leuchteninnenraum kann mindestens ein hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Wenigstens einer Lichtquelle des Leuchtmittels können ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

Die Lichtscheibe ist durch eine transparente Abdeckung gebildet, welche den Leuchteninnenraum sowie die von diesem beherbergten Bauteile gegen Witterungseinflüsse schützt.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Leuchtenkammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere oder alle Leuchtenkammern gleiche oder jede Leuchtenkammer eine andere Lichtfunktionen erfüllen kann.

Bei einer Lichtfunktion handelt es sich dabei um eine zur Erfüllung einer Aufgabe vorgesehene Funktion der Kraftfahrzeugleuchte. Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Schlusslicht- oder Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Ein Leuchtmittel für wenigstens eine Lichtfunktion umfasst zumindest wenigstens eine Lichtquelle, beispielsweise mindestens eine Glühlampe oder mindestens eine Gasentladungslampe oder mindestens eine Leuchtdiode sowie gegebenenfalls Kombinationen hiervon.

Beispielsweise kommen als Lichtquellen von Leuchtmitteln für Kraftfahrzeugleuchten unter anderem wegen ihres geringen Stromverbrauchs vermehrt Leuchtdioden zum Einsatz. Diese bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln Kraftfahrzeugleuchten verwirklicht werden, die an fast jede nur erdenkliche Einbausituation angepasst sein können.

Eine typische Anpassung an die Einbausituation betrifft die äußere Gestalt der Kraftfahrzeugleuchte. Diese äußere Gestalt der Kraftfahrzeugleuchte ist beispielsweise durch die gestalterische Formgebung eines Kraftfahrzeugs sowie durch die vorgesehene Kontur der Kraftfahrzeugleuchte vorgegeben und spiegelt sich im so genannten Strakverlauf der Kraftfahrzeugleuchte wider.

Neben der Anpassung an die Einbausituation müssen Kraftfahrzeugleuchten sehr hohe Qualitätsanforderungen erfüllen. So werden beispielsweise bereits geringe Abweichungen von einem homogenen Eindruck beispielsweise des Gesamtbilds und/oder der Ausleuchtung beispielsweise einer Leuchtenkammer, wie beispielsweise ein dunkel erscheinendes Lampenloch und/oder ein möglicherweise blendender direkter Blick des Betrachters auf die Lichtquelle eines Leuchtmittels als qualitätsmindernd angesehen.

Um den hohen Qualitätsanforderungen an Kraftfahrzeugleuchten gerecht zu werden, ist ein Ziel bei der Entwicklung von Kraftfahrzeugleuchten, das oder die Lichtquellen einer oder mehrerer Lichtfunktionen einer Kraftfahrzeugleuchte vor dem direkten Blick eines Betrachters zu verbergen.

Um eine oder mehrere, ihr Licht in einen oder mehrere Reflektoren strahlende Lichtquellen eines Leuchtmittels dem Blick des Betrachters zu entziehen, welches Licht mittels Reflexion an entsprechenden Formen bzw. Reflektorstrukturen auf dem Reflektor, wie etwa Kissen, Walzen, etc., in die gewünschte Richtung gelenkt wird, ist bekannt, die Lichtquelle beispielsweise oberhalb oder unterhalb des Reflektors oder neben diesem anzuordnen und das von ihr abgestrahlte Licht seitlich in einen Reflektor einzustrahlen. Hierdurch ist die Lichtquelle für den Betrachter beim direkten Blick aus normaler Richtung, wie dies der Sicht eines anderen Verkehrsteilnehmers bei in ein Kraftfahrzeug eingebautem Zustand entspricht, auf die Kraftfahrzeugleuchte nicht erkennbar. Diese wird erst sichtbar, sobald der Betrachter von oben oder unten her in die Kraftfahrzeugleuchte blickt. Da dies tatsächlich eher selten vorkommt, können Lichtquellen auf diese Art gut verborgen werden und der Reflektor weitestgehend lampenlochfrei gehalten werden.

Aufgrund der meist starken Strakverläufe ist es nicht immer möglich die Lichtquellen in einer lichttechnisch günstigen Lage, wie etwa direkt abstrahlend oder von oben oder unten her in den Reflektor einstrahlend einzubinden. Zum anderen kann hierdurch unabhängig vom Strakverlauf nicht vollständig sichergestellt werden, dass dadurch ein direkter Blick auf die Lichtquelle von außen durch die Lichtscheibe hindurch vollständig verwehrt ist.

So kommt es insbesondere bei starken Strakverläufen vor, dass die Lichtquellen bei der Betrachtung von außerhalb der Kraftfahrzeugleuchte durch die Lichtscheibe hindurch teilweise sichtbar sind. Eine zumindest aus einigen Blickwinkeln von außerhalb der Kraftfahrzeugleuchte durch die Lichtscheibe hindurch sichtbare Lichtquelle eines zur Erfüllung einer Lichtfunktion vorgesehenen Leuchtmittels wird als störend und den Qualitätseindruck nachhaltig negativ beeinflussend empfundenen.

Ein vollständiges Verbergen der Lichtquellen ist erst z. B. mittels auch als Lichtleiter bezeichneter, totalreflektierender (TIR; Total Internal Reflection), lichtleitender Elemente mit einem Lichteinkoppelbereich und einem Lichtauskoppelbereich möglich, die das in sie am Lichteinkoppelbereich eingekoppelte Licht von einer verborgen angeordneten Lichtquelle in Richtung Auskoppelbereich leiten und dort wieder auskoppeln. Das ausgekoppelte Licht kann dabei direkt, ohne einen Reflektor in der gewünschten Richtung abgestrahlt werden, oder indirekt, indem es in einen Reflektor eingestrahlt wird, der es dann in die gewünschte Richtung reflektiert.

Bei einer Kraftfahrzeugleuchte können ein oder mehrere Lichtleiter vorgesehen sein, beispielsweise um eine gewünschte Lichtverteilung z.B. über die Lichtscheibe hinweg des von einer oder mehreren Lichtquellen ausgestrahlten Lichts zu erhalten.

Ein Lichtleiter, in den Licht mindestens einer Lichtquelle an mindestens einer Lichteinkoppelfläche des Lichteinkoppelbereichs ein- und an mindestens einer von der Lichteinkoppelfläche verschiedenen Lichtauskoppelfläche des Lichtauskoppelbereichs wieder ausgekoppelt wird, kann dabei als ein separates Bauteil im Leuchteninnenraum beherbergt oder Teil eines Leuchtmittels sein.

Beispielsweise kann ein Leuchtmittel einen oder mehrere Lichtleiter sowie eine oder mehrere, das von ihnen ausgestrahlte Licht zumindest zum Teil in den wenigstens einen Lichtleiter einkoppelnde Lichtquellen umfassen. Ein Lichtleiter eines solchen Leuchtmittels kann beispielsweise als Primäroptik einer oder mehrerer LEDs dienen bzw. als eine solche Primäroptik ausgebildet sein.

Der Lichtleiter kann beispielsweise stabförmig als so genannter Stablichtleiter und/oder flächig als so genannter Flächenlichtleiter ausgebildet sein, mit einer auf seiner beispielsweise normal zur Hauptabstrahlrichtung einer Kraftfahrzeugleuchte orientierten Vorderseite angeordneten Lichtauskoppelfläche.

Nachteilig an Lichtleitern ist deren kostspieliger und hoher Entwicklungs- und Herstellungsaufwand. Ein weiterer Nachteil ist, dass ein insbesondere einem starken Strakverlauf angepasster Lichtleiter eine inhomogene Ausleuchtung durch das in ihn eingekoppelte Licht erfährt, was wiederum als qualitätsmindernd empfunden wird.

Um einen direkten Blick auf eine im eingeschalteten Zustand eine erhebliche Blendwirkung darstellende Lichtquelle eines Leuchtmittels zu verhindern sind darüber hinaus Blenden bekannt, welche von außen durch die Lichtscheibe hindurch gesehen vor der durch ein Lampenloch im Reflektor in eine Leuchtenkammer ragenden Lichtquelle angeordnet sind.

Durch DE 100 15 759 A1 ist eine Kraftfahrzeugleuchte mit einem Leuchtmittel mit mindestens einer Lichtquelle und einem Reflektor bekannt. Der Reflektor reflektiert von der Lichtquelle abgestrahltes Licht in Richtung auf eine durch eine Lichtscheibe abgeschlossene Lichtaustrittsöffnung. Eine Blende verhindert den direkten Strahlengang des Lichts von der Lichtquelle zur Austrittsöffnung. Die Blende ist auf ihrer der Lichtquelle zugewandten Seite als Abschirmreflektor ausgeführt, welcher von der Lichtquelle abgestrahltes Licht in Richtung auf den Reflektor reflektiert.

Nachteilig hieran ist der hohe Bedarf an Bautiefe hinter und vor dem Reflektor. Ein weiterer Nachteil hieran ist, dass die Lichtaustrittsöffnung dabei nur einen geringen Teil der Ansichtsfläche der Kraftfahrzeugleuchte aus Richtung des aus der Austrittsöffnung austretenden Lichts einnimmt.

Eine weitere Möglichkeit, den direkten Blick auf eine Lichtquelle einer Kraftfahrzeugleuchte zu verwehren ist die Verwendung einer zwischen Lichtquelle und Lichtscheibe angeordneten, strukturierten Optikscheibe.

Nachteilig hieran ist die Verringerung der Güte des optischen Systems, da die Optikscheibe einen Teil des von der Lichtquelle abgestrahlten Lichts absorbiert und/oder zurück reflektiert und darüber hinaus zumindest zum Teil diffus streut, wodurch eine höhere Lichtleistung erforderlich ist, um beispielsweise gesetzlich vorgegebene Werte einer Leuchtdichteverteilung in einer oder mehreren Vorzugsrichtungen einzuhalten. Damit einhergehend wird hierdurch ein zur Stromversorgung vorgesehenes Bordnetz eines Kraftfahrzeugs stärker belastet, weil insgesamt ein höherer Lichtstrom benötigt wird.

Der Erfindung liegt die Aufgabe zu Grunde, ein Kraftfahrzeugleuchte zu entwickeln, bei der im auch als Warmzustand bezeichneten eingeschalteten Zustand des Leuchtmittels ein direkter Blick auf ein zur Erfüllung einer Lichtfunktion der Kraftfahrzeugleuchte vorgesehenes Leuchtmittel verhindert ist, und bei der zumindest im auch als Kaltzustand bezeichneten ausgeschalteten Zustand des Leuchtmittels der Blick auf ein dunkel erscheinendes Lampenloch verwehrt ist. Die Kraftfahrzeugleuchte soll darüber hinaus eine hohe Güte ihres optischen Systems aufweisen, um die Belastung eines Bordnetzes eines Kraftfahrzeugs möglichst gering zu halten, einhergehend mit einer Verringerung des Kraftstoff- bzw. Energiebedarfs des Kraftfahrzeugs.

Die Aufgabe wird gelöst mit den Merkmalen des unabhängigen Anspruchs.

Die Erfindung sieht demnach zur Lösung der Aufgabe unter gleichzeitiger Behebung der genannten Nachteile des Standes der Technik eine Kraftfahrzeugleuchte mit einem von einem Leuchtengehäuse und einer Lichtscheibe umschlossenen Leuchteninnenraum vor. In dem Leuchteninnenraum sind wenigstens ein Reflektor und ein Leuchtmittel mit mindestens einer Lichtquelle beherbergt. In dem Reflektor ist mindestens eine Aussparung als Lampenloch für wenigstens eine Lichtquelle vorgesehen. Darüber hinaus ist eine mit der Aussparung vorzugsweise korrespondierende, die Aussparung vorzugsweise in Form, Funktion und Aussehen des Reflektors nachbildende Abdeckung vorgesehen. Die Lichtquelle ist mit Blick auf die der Lichtscheibe zugewandte Vorderseite des Reflektors, beispielsweise in Richtung einer lokalen Flächennormalen einer durch die Aussparung gebildeten Fläche gesehen, hinter der Abdeckung angeordnet. Mit anderen Worten ist die Lichtquelle in Blickrichtung von außerhalb der Kraftfahrzeugleuchte durch die Lichtscheibe hindurch gesehen hinter der der Lichtscheibe abgewandten Rückseite der Abdeckung angeordnet. Zumindest die Abdeckung ist beispielsweise gemeinsam mit der Lichtquelle oder unabhängig von dieser entlang einer Bewegungsbahn, bevorzugt in Richtung einer lokalen Flächennormalen einer durch die Aussparung gebildeten Fläche zumindest zwischen einem einem Kaltzustand der Kraftfahrzeugleuchte mit ausgeschaltetem Leuchtmittel entsprechenden ersten Zustand, in dem die Abdeckung die Aussparung im Reflektor abschließt und einem einem Warmzustand der Kraftfahrzeugleuchte mit eingeschaltetem Leuchtmittel entsprechenden zweiten Zustand, in dem die Abdeckung die Aussparung freigibt, relativ zum Reflektor beweglich angeordnet.

Das Abschließen der Aussparung im Reflektor durch die Abdeckung im ersten Zustand kann beispielsweise erfolgen, indem die Abdeckung mit dem die Aussparung umgebenden Rand des Reflektors auf der Vorderseite des Reflektors bündig abschließt oder die Aussparung beispielsweise überdeckt, indem die Abdeckung den die Ausspraung umgebenden Rand des Reflektors auf dessen Vorderseite überlappt. Dabei kann die Aussparung an der Vorderseite des Reflektors anliegen.

Das Freigeben der Aussparung erfolgt, indem sich die Abdeckung beim Blick auf die Vorderseite des Reflektors gesehen vor der vom Reflektor begrenzten Aussparung befindet. Vorzugsweise ragt die Lichtquelle in dem zweiten Zustand auf der Vorderseite des Reflektors zumindest zum Teil über die durch die von der vom Reflektor begrenzten Aussparung gebildeten Fläche.

Die Lichtquelle kann dabei in Blickrichtung auf die Vorderseite des Reflektors unmittelbar hinter der Abdeckung angeordnet sein.

Die Lichtquelle kann fest stehend angeordnet sein, wohingegen Reflektor und/oder Abdeckung relativ zur Lichtquelle beweglich angeordnet sein können.

Alternativ oder zusätzlich kann die Lichtquelle beispielsweise gemeinsam mit der Abdeckung relativ zum Reflektor oder gemeinsam mit dem Reflektor relativ zur Abdeckung beweglich angeordnet sein.

Bevorzugt sind nicht Reflektor und Abdeckung und Lichtquelle beweglich angeordnet, sondern entweder nur der Reflektor oder nur die Abdeckung gegebenenfalls gemeinsam mit der Lichtquelle.

Die Lichtquelle kann an der Abdeckung mechanisch befestigt und elektrisch kontaktiert sein, so dass nur eine Mimik für die Relativbewegung zwischen Reflektor und Abdeckung erforderlich ist.

Eine vorteilhafte Ausgestaltung sieht vor, dass zusätzlich ein Primärreflektor vorgesehen ist, der gemeinsam mit der Abdeckung und der Lichtquelle relativ zum Reflektor beweglich angeordnet ist. Die Lichtquelle ist dabei zwischen Abdeckung und Primärreflektor angeordnet. Der Primärreflektor schließt im zweiten Zustand vorzugsweise bündig mit dem die Aussparung umgebenden Reflektor ab. Dabei liegt zumindest der Rand des Primärreflektors in der durch den die Aussparung umgebenden Rand des Reflektors gebildeten Ebene bzw. Fläche. Alternativ kann der Primärreflektor im zweiten Zustand einen die Aussparung umgebenden Rand des Reflektors auf dessen der Lichtscheibe abgewandten Rückseite überlappen. Der Primärreflektor kann dabei an den die Aussparung umgebenden Reflektor auf dessen Rückseite anliegen.

Der Primärreflektor lenkt das von der Lichtquelle abgestrahlte Licht in eine oder mehrere gewünschte Richtungen, so dass gegebenenfalls durch Mehrfachreflexion am Primärreflektor, einem gegebenenfalls vorgesehenen Sekundärreflektor sowie dem die Aussparung umgebenden Reflektor eine Abstrahlcharakteristik beim Austritt aus der Lichtscheibe erhalten wird, welche die gesetzlichen Vorgaben an eine Lichtfunktion einer Kraftfahrzeugleuchte in Bezug auf Leuchtdichteverteilung in einer oder mehreren Vorzugsrichtungen einhält.

Die relative Bewegung zwischen Reflektor und Abdeckung sowie gegebenenfalls Lichtquelle erfolgt vorzugsweise geradlinig. Grundsätzlich kann jede beliebige Bahnkurve für die Bewegungsbahn der Relativbewegung vorgesehen sein.

Die Lichtquelle kann wenigstens einen zumindest eine Lichtaustrittsfläche aufweisenden Lichtaustrittsbereich mindestens eines Lichtleiters umfassen, in den im Warmzustand an mindestens einer von der Lichtauskoppelfläche verschiedenen Lichteinkoppelfläche eines Lichteinkoppelbereichs Licht eingekoppelt wird. Bei der Verwendung eines Lichtleiters kann dieser beispielsweise elastisch ausgeführt sein, so dass der Lichtauskoppelbereich elastisch beweglich relativ zum Lichteinkoppelbereich ist. Dadurch können die mindestens eine ihr Licht in den Lichtleiter einkoppelnden Lichtquelle und der Lichteinkoppelbereich fest und unbeweglich angeordnet sein, wohingegen der Lichtauskoppelbereich durchaus Relativbewegungen gegenüber dem Reflektor und/oder der Abdeckung ausführen kann.

Ist beispielsweise die Lichtquelle unbeweglich relativ zur Abdeckung und/oder zum Reflektor angeordnet, so kann die Abdeckung auf ihrer dem Betrachter ab- und dem Reflektor bzw. der Aussparung zugewandten Seite mit einem Sekundärreflektor versehen sein, welcher von der Lichtquelle ausgestrahltes Licht in den umgebenden Reflektor reflektiert.

Generell kann ein Sekundärreflektor an der der Lichtscheibe abgewandten Rückseite der Abdeckung vorgesehen sein, beispielsweise indem die Abdeckung mit einem derartigen Sekundärreflektor versehen ist oder indem ein solcher Sekundärreflektor an der Rückseite der Abdeckung angeordnet ist.

Der Sekundärreflektor erfüllt gemeinsam mit dem das Lampenloch umgebenden Reflektor vorzugsweise zumindest die gesetzlichen Anforderungen in Bezug auf den Erhalt einer vorgegebenen Leuchtdichte in einer oder mehreren Vorzugsrichtungen einer Kraftfahrzeugleuchte, wenn die Lichtquelle im Warmzustand ihr Licht über den Sekundärreflektor und den umgebenden Reflektor abstrahlt.

Als Lichtquelle kommen beispielsweise eine oder mehrere Licht gleicher oder unterschiedlicher Farbe abstrahlende LEDs zum Einsatz. Bei der Verwendung verschiedenfarbiger LEDs können mehrere Lichtfunktionen in ein und der selben Leuchte bzw. Leuchtenkammer der Leuchte verwirklicht werden. LEDs weisen bei gleicher Lichtstärke einen im Vergleich zu anderen Lichtquellen geringeren Stromverbrauch auf. LEDs können darüber hinaus zumindest annäherungsweise als Punktlichtquelle angesehen werden. Dies führt dazu, dass das Licht eines ausgelegten Reflektors weniger gestreut wird, als bei einer Lichtquelle in Form einer Glühlampe mit einer räumlich ausgedehnten Glühwendel. Hierdurch kann das Reflektordesign exakter ausgeführt werden, wodurch darüber hinaus eine höhere Effizienz des optischen Systems erhalten wird. Ferner weisen LEDs eine weit höhere Lebensdauer auf, als andere, zur Anwendung in einer Kraftfahrzeugleuchte in Frage kommende Lichtquellen. Durch die längere Lebensdauer wird unter Anderem durch die geringere Ausfallquote die Betriebssicherheit und damit einhergehend die Qualität der Kraftfahrzeugleuchte erhöht.

Zum Betrieb von LEDs als Lichtquellen für ein Leuchtmittel einer Kraftfahrzeugleuchte können eine oder mehrere mehr oder minder komplexe elektronische Steuerschaltungen vorgesehen sein, die beispielsweise auf einem oder mehreren Leuchtmittelträgern des Leuchtmittels angeordnet und in dem Leuchteninnenraum beherbergt sein können.

Ein einfaches Beispiel für eine elektronische Steuerschaltung betrifft die Angleichung unterschiedlicher Helligkeiten einzelner LEDs oder von LED-Strängen innerhalb einer Gruppe gemeinsam betriebener, auf einem oder mehreren Leuchtmittelträgern angeordneter LEDs. Eine solche elektronische Steuerschaltung besteht aus mindestens einem oder mehreren Vorwiderständen zur Anpassung der Vorwärtsspannung der LEDs an das Bordnetz. Beispielsweise ist bekannt, die LEDs im so genannten Binning nach Vorwärtsspannung und Intensität zu sortieren. Um Unterschiede zwischen mehreren LED-Strängen auszugleichen, die jeweils aus in Reihe geschalteten LEDs gleicher Vorwärtsspannung und Intensität bestehen, und um eine homogene Helligkeitsverteilung der benachbarten LED-Stränge aus LEDs mit unterschiedlicher Vorwärtsspannung und Intensität zu erhalten, wird zumindest jeder LED-Strang mit einem anderen Vorwiderstand versehen.

LEDs bedürfen darüber hinaus beim Einsatz als Lichtquelle insbesondere in Kraftfahrzeugleuchten oft einer separaten Ausfallerkennung. Dies ist bedingt durch die geringe Leistungsaufnahme von LEDs im Allgemeinen. Beispielsweise ist ein in einem Kraftfahrzeug untergebrachtes Steuergerät nicht in der Lage, eine dem Ausfall einer oder weniger LEDs entsprechende Änderung der Leistungsentnahme aus dem Bordnetz zu erkennen, da eine hieraus resultierende Bordnetzspannungsänderung unterhalb der im normalen Betrieb eines Kraftfahrzeugs auftretenden Bordnetzspannungssschwankung liegt. Eine beispielsweise in der Kraftfahrzeugleuchte untergebrachte elektronische Schaltungsanordnung zur Ausfallerkennung erfasst den Ausfall einer oder mehrerer Leuchtdioden in der Kraftfahrzeugleuchte z.B. mittels eines oder mehrerer Komparatoren und teilt dies dem Steuergerät mit. Diese elektronische Schaltungsanordnung zur Ausfallerkennung kann durch eine beispielsweise auf dem Leuchtmittelträger aufgebrachte elektronische Steuerschaltung verwirklicht sein.

Darüber hinaus können LEDs weiterer elektronischer Steuerschaltungen bedürfen. Beispiele hierfür sind elektronische Steuerschaltungen:
- zur Regelung und/oder Steuerung der Helligkeit bzw. Leuchtkraft der LEDs, beispielsweise durch eine pulsweitenmodulierte Taktung der Stromversorgung für einen außerhalb des für das menschliche Auge wahrnehmbaren Bereichs gepulsten Betrieb,
- zur Kompensation oder Vermeidung elektromagnetischer Störungen, beispielsweise aufgebaut aus Kondensatoren und/oder Ferriten,
- zum Schutz der LEDs z.B. vor einer Überspannung des Bordnetzes oder vor fehlerhafter Polung, beispielsweise umfassend eine oder mehrere Zenerdioden,

Zusammengefasst muss für fast alle LED-Anwendungen eine mehr oder minder umfangreiche, für die speziellen LEDs ausgelegte elektronische Steuerschaltung z.B. auf den mindestens einen Leuchtmittelträger aufgebracht werden. Die elektronische Steuerschaltung umfasst im einfachsten Fall einen Vorwiderstand und eine Schutzdiode, kann aber je nach Anwendung auch wesentlich mehr Elektronikbauteile enthalten, wie z.B. Mikrokontroller bzw. Kontroller, Komparatoren, Transistoren, Schutzdioden, elektrische Widerstände z.B. als Vorwiderstand, Kondensatoren, Ferrite, etc.

Somit kann eine Kraftfahrzeugleuchte mit einer oder mehreren LEDs als Lichtquelle zumindest ein oben genanntes Elektronikbauteil sowie mindestens eine LED umfassen. Demnach kann eine Kraftfahrzeugleuchte mit einer oder mehreren LEDs als Lichtquellen neben der LED zumindest noch über ein weiteres Elektronikbauelement verfügen.

Die Abdeckung kann auf ihrer der Lichtscheibe zugewandten Vorderseite mit einer Reflektorstruktur versehen sein, welche einer gegebenenfalls auf dem Reflektor vorgesehenen Reflektorstruktur entspricht bzw. mit dieser identisch ist. Hierdurch entsteht bei direktem Blick auf die Kraftfahrzeugleuchte insbesondere im Kaltzustand der Eindruck eines Reflektors ohne Lichtquelle. Die Reflektorstruktur kann beispielsweise durch Bedampfen verspiegelt sein.

Die Abdeckung kann auf ihrer der Lichtscheibe zugewandten Vorderseite mit mindestens einer Grafik versehen sein. Die Grafik kann beispielsweise reliefartig erhaben oder vertieft oder flächig bündig in die Vorderseite eingearbeitet sein.

Bei der Grafik kann es sich um ein oder mehrere Bilder und/oder Zeichnungen und/oder grafische Darstellungen und/oder Logos und/oder Schriftzeichen, wie etwa Buchstaben und/oder Ziffern, etc. oder um eine oder mehrere Kombinationen hieraus handeln, wie etwa um ein Markenemblem, um nur einige denkbare Ausgestaltungen von Grafiken aufzuzählen.

Besonders bevorzugt ist die Grafik als ein Markenzeichen oder Logo ausgebildet, vorzugsweise als ein Markenzeichen oder Logo eines Herstellers von Kraftfahrzeugen, in welche die Kraftfahrzeugleuchte zum Einbau vorgesehen ist.

Alternativ oder zusätzlich kann die Grafik Prüfzeichen und/oder Zulassungszeichen umfassen, welche beispielsweise durch eine Hinterleuchtung im Kalt-oder Warmzustand einwandfrei sichtbar sein können und im Kaltzustand als nicht störend empfunden werden.

Ein beispielsweise durchgestochener Bereich in der Blende kann gegebenenfalls dazu dienen, die Grafik hinterzuleuchten, beispielsweise mittels eines Lichtleiters.

Der Leuchteninnenraum der Kraftfahrzeugleuchte kann in eine oder mehrere, einer gemeinsamen und/oder verschiedenen Lichtfunktionen zugeordnete Leuchtenkammern unterteilt sein, von denen mindestens eine Leuchtenkammer wie zuvor beschrieben mit einem Reflektor mit einer als Lampenloch dienenden Aussparung und einer beweglich gegenüber dieser Aussparung angeordneten Abdeckung ausgestattet ist, hinter der mindestens eine Lichtquelle wenigstens eines Leuchtmittels angeordnet ist.

Die Kraftfahrzeugleuchte kann beispielsweise als Heckleuchte für ein Kraftfahrzeug ausgebildet sein.

Es ist ersichtlich, dass die Erfindung in jedem Fall verwirklicht sein kann durch eine gegenüber einem mit einer Aussparung versehenen Reflektor in Richtung einer lokalen Flächennormalen einer durch die Aussparung gebildeten Fläche bewegliche Anordnung einer Abdeckung, die im ausgeschalteten Kaltzustand des Leuchtmittels die Aussparung verschließt und im eingeschalteten Warmzustand in Richtung der Flächennormalen verschoben ist und einerseits sowohl im Kalt- als auch im Warmzustand den direkten Blick auf eine hinter der Abdeckung angeordnete Lichtquelle des Leuchtmittels verwehrt und andererseits im Warmzustand erlaubt, dass das von der Lichtquelle abgestrahlte Licht von dem die Aussparung umgebenden Reflektor gemäß einer gewünschten Abstrahlcharakteristik unter Einhaltung einer beispielsweise gesetzlich vorgegebenen Leuchtdichte und Lichtverteilung in einer oder mehreren Vorzugsrichtungen für das aus der Kraftfahrzeugleuchte austretende Licht reflektiert wird.

Vorteile gegenüber dem Stand der Technik ergeben sich unter Anderem dadurch, dass durch die Erfindung eine im Kaltzustand lampenlochfreie Leuchtenkammer geschaffen wird, frei von außerhalb des Leuchteninnenraums durch die Lichtscheibe hindurch gesehen sichtbaren Lichtquellen, die im Warmzustand eine einwandfreie, hohe Güte ihres optischen Systems aufweist.

Die Erfindung ermöglicht im Kaltzustand eines Leuchtmittels einer Kraftfahrzeugleuchte eine aus Sicht von außerhalb der Kraftfahrzeugleuchte durch die Lichtscheibe hindurch vollständige Verbergung der Lichtquellen des Leuchtmittels sowie die Vermeidung von Lampenlöchern.

Weitere Vorteile ergeben sich insbesondere dadurch, dass durch die Verstellung zwischen Warm- und Kaltzustand die Abdeckung im Kaltzustand das Lampenloch im Reflektor zumindest annähernd vollständig verschließen kann. Dadurch werden im Kaltzustand die eine oder mehreren Lichtquellen des Leuchtmittels vollständig verborgen, ohne Einschränkungen insbesondere lichttechnischer Natur im Warmzustand in Kauf nehmen zu müssen.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

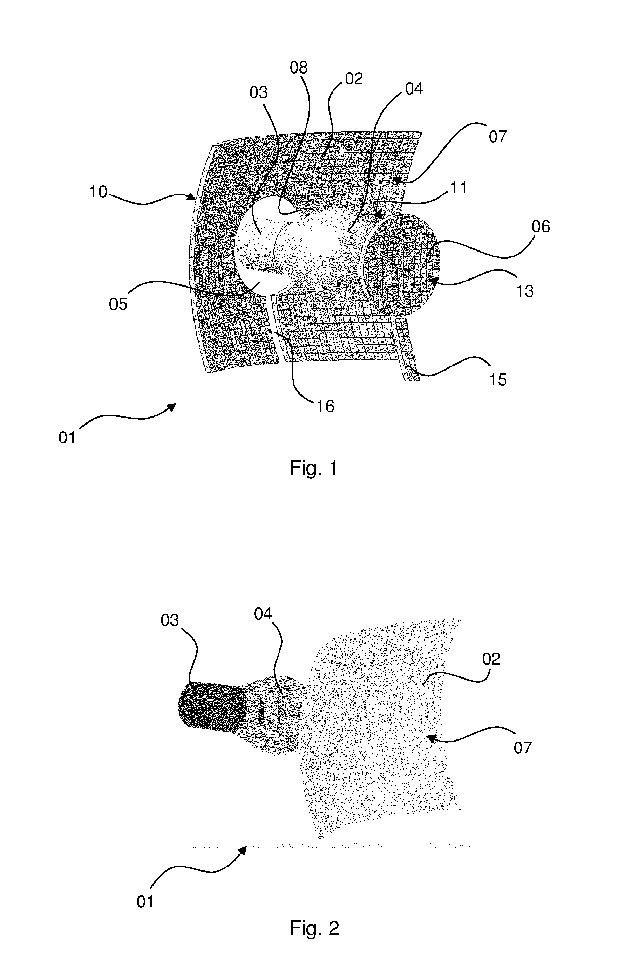

- Fig. 1: eine perspektivische Ansicht eines ersten Ausführungsbeispiels einer Kraftfahrzeugleuchte umfassend einen mit einer als Lampenloch dienenden Aussparung versehenen Reflektor sowie einer die Aussparung in einem ersten Zustand verschließenden und in einem zweiten Zustand frei gebenden, relativ zum Reflektor beweglich angeordneten Abdeckung im zweiten Zustand.
- Fig. 2: eine perspektivische Ansicht der Kraftfahrzeugleuchte aus Fig. 1 im ersten Zustand.

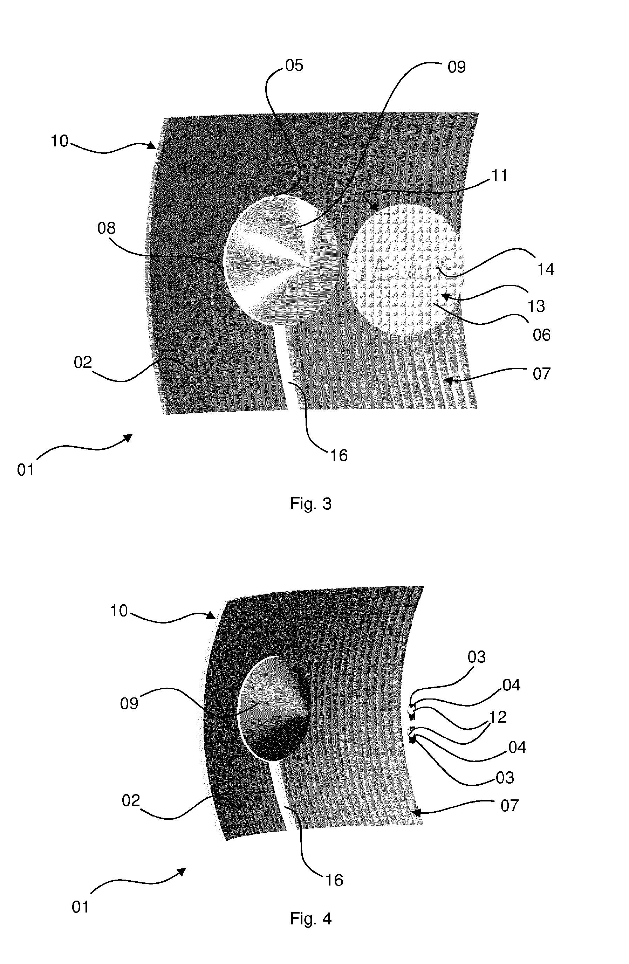

- Fig. 3: eine perspektivische Ansicht eines zweiten Ausführungsbeispiels einer Kraftfahrzeugleuchte umfassend einen mit einer als Lampenloch dienenden Aussparung versehenen Reflektor sowie einer die Aussparung in einem ersten Zustand verschließenden und in einem zweiten Zustand frei gebenden, relativ zum Reflektor beweglich angeordneten Abdeckung im zweiten Zustand.
- Fig. 4: eine perspektivische Ansicht der Kraftfahrzeugleuchte aus Fig. 3 im zweiten Zustand bei entfernter Abdeckung, um den Blick auf an der Abdeckung angeordnete, dort mechanisch befestigte und elektrisch kontaktierte Lichtquellen eines Leuchtmittels der Kraftfahrzeugleuchte frei zu geben.

Eine in den Fig. 1 bis Fig. 4 ganz oder in Teilen dargestellte, beispielsweise als Heckleuchte ausgeführten Kraftfahrzeugleuchte 01 weist mindestens einen Reflektor 02 sowie wenigstens ein Leuchtmittel 03 mit zumindest einer Lichtquelle 04 auf. Der mindestens eine Reflektor 02 mitsamt dem wenigstens einen zumindest eine Lichtquelle 04 umfassenden Leuchtmittel 03 können in einem von einem nicht näher dargestellten Leuchtengehäuse und einer transparenten, vorzugsweise klaren und farblosen Lichtscheibe umschlossenen Leuchteninnenraum beherbergt sein.

In dem Reflektor 02 ist mindestens eine Aussparung 05 als Lampenloch für wenigstens eine Lichtquelle 04 des Leuchtmittels 03 vorgesehen.

Die Kraftfahrzeugleuchte 01 umfasst eine die durch die Aussparung 05 dem Reflektor 02 entnommene Fläche nachbildende Abdeckung 06. Zumindest die Abdeckung 06 ist entlang bzw. in Richtung einer Bewegungsbahn zumindest zwischen einem einem in Fig. 2 dargestellten Kaltzustand der Kraftfahrzeugleuchte 01 mit ausgeschaltetem Leuchtmittel 03 entsprechenden ersten Zustand und einem einem in Fig. 1 und Fig. 3 dargestellten Warmzustand der Kraftfahrzeugleuchte 01 mit eingeschaltetem Leuchtmittel 03 entsprechenden zweiten Zustand relativ zum Reflektor 02 beweglich angeordnet.

In dem in Fig. 2 dargestellten, ersten Zustand schließt die Abdeckung 06 die Aussparung 05 im Reflektor 02 bündig mit der Vorderseite 07 des Reflektors 02 ab. Die Abdeckung 06 korrespondiert dabei mit der Form der Aussparung 05 und in Aussehen und Gestalt der Vorderseite 07 des Reflektors 02 vorzugsweise derart, dass im ersten Zustand die bündig mit der Vorderseite 07 des Reflektors 02 abschließende Abdeckung 06 im Reflektor 02 als solche nicht erkennbar ist.

In dem in Fig. 1, Fig. 3 und Fig. 4 dargestellten, zweiten Zustand gibt die Abdeckung 06 die Aussparung 05 frei und befindet sich beim in Fig. 1, Fig. 2, Fig. 3 und Fig. 4 dargestellten Blick auf die vor der Vorderseite 07 des Reflektors 02 vor der vom Reflektor 02 begrenzten Aussparung 05.

Vorzugsweise ragt im zweiten Zustand die Lichtquelle 04 auf der Vorderseite 07 des Reflektors 02 zumindest zum Teil über den die Aussparung 05 begrenzenden und diese umgebenden Rand 08 des Reflektors 02.

Die Lichtquelle 04 ist mit Blick auf die der Lichtscheibe zugewandte Vorderseite 07 des Reflektors 02 gesehen hinter der Abdeckung 06 angeordnet, so dass die Abdeckung 06 im Warmzustand und im Kaltzustand sowieso, in dem die Abdeckung 06 die Aussparung 05 verschließt, den direkten Strahlengang von der mindestens einen Lichtquelle 04 abgestrahlten Lichts durch die Lichtscheibe hindurch verhindert und damit den direkten Blick auf die Lichtquelle 04 verwehrt.

Fig. 4 zeigt hierbei die selbe Ansicht mit Blick auf die Vorderseite 07 des Reflektors 02 wie Fig. 3, wobei die Abdeckung 06 der Übersichtlichkeit halber entfernt ist, um zur Erläuterung des Aufbaus der Kraftfahrzeugleuchte 01 den Blick auf an oder hinter der Abdeckung 06 angeordnete, dort mechanisch befestigte und elektrisch kontaktierte Lichtquellen 04 eines Leuchtmittels 03 der Kraftfahrzeugleuchte 01 frei zu geben.

Die Bewegungsbahn kann zumindest abschnittsweise entlang einer eine lokale Flächennormale einer durch die Aussparung 06 gebildeten Fläche umfassenden Geraden verlaufen. Vorzugsweise ist die Bewegungsbahn eine Strecke entlang einer eine lokale Flächennormale einer durch die Aussparung 06 gebildeten Fläche umfassenden Geraden.

Die Abdeckung 06 kann mit der Aussparung 05 korrespondierend ausgebildet sein. Beispielsweise kann die Abdeckung 06 wie in Fig. 1 dargestellt die Aussparung 05 in Form, Funktion und Aussehen des Reflektors 02 nachbilden. Hierdurch ist im in Fig. 2 dargestellten ersten Zustand weder die Aussparung 05, noch die Abdeckung 06 erkennbar. Für den Betrachter ergibt sich der Eindruck eines vollkommen homogenen, lampenloch- und lichtquellenfreien Reflektors 02.

Die Abdeckung 06 kann im in Fig. 2 dargestellten, dem Kaltzustand entsprechenden ersten Zustand, die Aussparung 05 auf zweierlei Art und Weise abdecken.

Zum einen kann die Abdeckung 06 die Aussparung 05 und damit mit der Vorderseite 07 des Reflektors 02 bündig abschließen. Abgesehen von erforderlichen Toleranzen und Spalten, die notwendig sind, dass die Abdeckung 06 in die Aussparung 05 einfahren kann, um bündig mit der Vorderseite 07 des Reflektors 02 abzuschließen, weist dabei die Abdeckung 06 eine mit der durch den die Aussparung 05 begrenzenden und diese umgebenden Rand 08 des Reflektors 02 gebildeten Außenkontur hinsichtlich Geometrie und Abmessungen identische Form auf.

Zum anderen kann die Abdeckung 06 an den die Aussparung 05 umgebenden Reflektor 02 auf dessen der Lichtscheibe zugewandten Vorderseite 07 anliegen und dabei den die Aussparung 05 umgebenden Rand 08 des Reflektors 02 überlappen. Hierbei schließt die Abdeckung nicht um die Aussparung 05 herum bündig mit der Vorderseite 07 des Reflektors 02 ab. Dafür ist die Herstellung vereinfacht, da das Überlappen einen Toleranzausgleich erlaubt.

Die Abdeckung 06 kann gemeinsam mit der Lichtquelle 04 oder unabhängig von dieser in Richtung der Bewegungsbahn relativ zum Reflektor 02 beweglich angeordnet sein.

Ist die Abdeckung 06 gemeinsam mit der Lichtquelle 04 beweglich angeordnet, kann die Lichtquelle 04 an der Abdeckung 06 mechanisch befestigt und elektrisch kontaktiert angeordnet sein, so dass nur eine Mimik für die Relativbewegung zwischen Reflektor 02 und Abdeckung 06 erforderlich ist.

Die Kraftfahrzeugleuchte 01 kann darüber hinaus wie in Fig. 3 dargestellt einen Primärreflektor 09 umfassen. Der Primärreflektor 09 ist gemeinsam mit der Abdeckung 06 und der Lichtquelle 04 relativ zum Reflektor 02 beweglich angeordnet. Die Lichtquelle 04 ist zwischen der Abdeckung 06 und dem Primärreflektor 09 angeordnet. Der Primärreflektor 09 schließt im zweiten Zustand entweder bündig mit dem die Aussparung 05 umgebenden Reflektor 02 bzw. dessen Vorderseite 07 ab, oder liegt an den die Aussparung 05 umgebenden Reflektor 02 auf dessen der Lichtscheibe abgewandten Rückseite 10 an und überlappt dabei den die Aussparung 05 umgebenden Rand 08 des Reflektors 02. Der Primärreflektor 09 lenkt das von der Lichtquelle 04 abgestrahlte Licht in eine oder mehrere gewünschte Richtungen, so dass gegebenenfalls durch Mehrfachreflexion am Primärreflektor 09, einem gegebenenfalls auf der Rückseite 11 der Abdeckung 06 vorgesehenen Sekundärreflektor sowie dem die Aussparung 05 umgebenden Reflektor 02 eine Abstrahlcharakteristik beim Austritt aus der Lichtscheibe erhalten wird, welche die gesetzlichen Vorgaben an eine Lichtfunktion der Kraftfahrzeugleuchte 01 in Bezug auf Leuchtdichteverteilung in einer oder mehreren Vorzugsrichtungen einhält.

Ein auf der Rückseite 11 der Abdeckung 06 vorgesehener, beispielsweise dort, von der Lichtquelle 04 abgestrahltes Licht in den die Aussparung 05 umgebenden Reflektor 02 reflektierenden Sekundärreflektor kann auf der Rückseite 11 der Abdeckung 06 beispielsweise angeordnet oder dort ausgebildet sein.

Mindestens eine LED 12 kann wie in Fig. 4 dargestellt als wenigstens eine Lichtquelle 04 zumindest eines Leuchtmittels 03 der Kraftfahrzeugleuchte 01 vorgesehen sein.

Durch die Verwendung von LEDs 12 als Lichtquellen 04 kann auf eine Farbfilterung durch eine eingefärbte Lichtscheibe verzichtet werden, wie sie beispielsweise bei Glühlampen erforderlich ist.

Bei der Verwendung von LEDs 12 ist eine solche Einfärbung der Lichtscheibe nicht erforderlich. Dadurch können bei der Verwendung von LEDs 12 auch farblose Lichtscheiben zum Einsatz kommen da keine Farbfilterung erforderlich ist. In diesem Fall können zugleich Kosten eingespart werden, da auf den Rottakt beim Kunststoffspritzen der Lichtscheibe komplett verzichtet werden kann. Darüber hinaus können mehrere gleich- oder verschiedenfarbige LEDs 12 als Lichtquellen 04 eines Leuchtmittels 03 vorgesehen sein, beispielsweise um mehrere Lichtfunktionen beispielsweise unterschiedlicher Helligkeit und/oder unterschiedlicher Farbe in ein und der selben Leuchtenkammer der Kraftfahrzeugleuchte 01 unter zu bringen.

Die Abdeckung 06 kann wie in Fig. 3 dargestellt auf ihrer der Lichtscheibe zugewandten Vorderseite 13 mit mindestens einer Grafik 14 versehen sein. Die Grafik 14 kann beispielsweise reliefartig erhaben oder vertieft oder flächig bündig in die Vorderseite 13 der Abdeckung 06 eingearbeitet sein.

Bei der Grafik 14 kann es sich um ein oder mehrere Bilder und/oder Zeichnungen und/oder grafische Darstellungen und/oder Logos und/oder Schriftzeichen, wie etwa Buchstaben und/oder Ziffern, etc. oder um eine oder mehrere Kombinationen hieraus handeln, wie etwa um ein Markenemblem, um nur einige denkbare Ausgestaltungen von Grafiken aufzuzählen.

Die Abdeckung 06 kann wie in Fig. 2 dargestellt einen Steg 15 umfassen, der mit einer entsprechenden Partie 16 der Aussparung 05 korrespondieren kann. Der Steg 15 kann der beweglichen Anordnung der Abdeckung 06 beispielsweise durch Befestigung an einer die Bewegung entlang der Bewegungsbahn ausführenden Mimik dienen. Gleichzeitig kann der Steg 15 der Kaschierung einer eventuell vorgesehenen elektrischen Kontaktierung der Lichtquelle 04 eines Leuchtmittels 03 dienen, wie etwa der als Lichtquellen 04 vorgesehenen und an der Abdeckung mechanisch befestigten und elektrischen kontaktierten LEDs 12. Gegenüber einer Anbindung der Abdeckung 06 nach hinten durch die Aussparung 05 hindurch hat dies den Vorteil einer abschattungsfreien Ausleuchtung des Reflektors 02. In Fig. 3 ist der Steg 15 der Übersichtlichkeit halber nicht dargestellt, ebenso wenig in Fig. 4, in welcher die gesamte Abdeckung 06 nicht dargestellt ist, um die dort als Lichtquellen 04 vorgesehenen LEDs 12 zeigen zu können.

Wichtig ist hervorzuheben, dass der Leuchteninnenraum einer zuvor beschriebenen Kraftfahrzeugleuchte 01 in eine oder mehrere Leuchtenkammern unterteilt sein kann, von denen zumindest eine Leuchtenkammer einen zuvor beschriebenen Reflektor 02 nebst relativ gegenüber diesem beweglich angeordneter Abdeckung 06 aufweist.

Die Erfindung ist insbesondere im Bereich der Herstellung von Kraftfahrzeugleuchten gewerblich anwendbar.

### Bezugszeichenliste

- 01: Kraftfahrzeugleuchte
- 02: Reflektor
- 03: Leuchtmittel
- 04: Lichtquelle
- 05: Aussparung
- 06: Abdeckung
- 07: Vorderseite des Reflektors
- 08: die Aussparung umgebender Rand des Reflektors
- 09: Primärreflektor
- 10: Rückseite des Reflektors
- 11: Rückseite der Abdeckung
- 12: LED
- 13: Vorderseite der Abdeckung
- 14: Grafik
- 15: Steg
- 16: Partie

## Patentansprüche

1. Kraftfahrzeugleuchte (01) mit einem von einem Leuchtengehäuse und einer Lichtscheibe umschlossenen Leuchteninnenraum, in dem wenigstens ein Reflektor (02) und ein Leuchtmittel (03) mit mindestens einer Lichtquelle (04) beherbergt sind, wobei in dem Reflektor (02) mindestens eine Aussparung (05) als Lampenloch für wenigstens eine Lichtquelle (04) des Leuchtmittels (03) vorgesehen ist,
**dadurch gekennzeichnet, dass**
- eine die Aussparung (05) nachbildende Abdeckung (06) vorgesehen ist,
- die Lichtquelle (04) mit Blick auf die der Lichtscheibe zugewandte Vorderseite (07) des Reflektors (02) gesehen hinter der Abdeckung (06) angeordnet ist,
- zumindest die Abdeckung (06) in Richtung einer Bewegungsbahn zumindest zwischen einem einem Kaltzustand der Kraftfahrzeugleuchte (01) mit ausgeschaltetem Leuchtmittel (03) entsprechenden ersten Zustand und einem einem Warmzustand der Kraftfahrzeugleuchte (01) mit eingeschaltetem Leuchtmittel (03) entsprechenden zweiten Zustand relativ zum Reflektor (02) beweglich angeordnet ist, wobei
- in dem ersten Zustand die Abdeckung (06) die Aussparung (05) im Reflektor (02) abschließt, und
- in dem zweiten Zustand die Abdeckung (06) die Aussparung (05) freigibt und sich beim Blick auf die Vorderseite (07) des Reflektors (02) vor der vom Reflektor (02) begrenzten Aussparung (05) befindet.

2. Kraftfahrzeugleuchte nach Anspruch 1,
**dadurch gekennzeichnet,**
**dass** die Abdeckung (06) mit der Aussparung (05) korrespondierend ausgebildet ist.

3. Kraftfahrzeugleuchte nach Anspruch 1 oder 2,
**dadurch gekennzeichnet,**
**dass** die Abdeckung (06) die Aussparung (05) in Form, Funktion und Aussehen des Reflektors (02) nachbildet.

4. Kraftfahrzeugleuchte nach Anspruch 1, 2 oder 3,
**dadurch gekennzeichnet,**
**dass** in dem ersten Zustand die Abdeckung (06) die Aussparung (05) abschließt, indem sie bündig mit der Vorderseite (07) des die Aussparung (05) umgebenden Reflektors (02) abschließt oder indem sie die Aussparung (05) überdeckt und einen die Aussparung (05) umgebenden Rand (08) des Reflektors (02) überlappt.

5. Kraftfahrzeugleuchte nach einem der vorhergehenden Ansprüche,
**dadurch gekennzeichnet,**
**dass** die Lichtquelle (03) wenigstens einen zumindest eine Lichtaustrittsfläche aufweisenden Lichtaustrittsbereich mindestens eines Lichtleiters umfasst, in den im Warmzustand an mindestens einer von der Lichtauskoppelfläche verschiedenen Lichteinkoppelfläche eines Lichteinkoppelbereichs Licht eingekoppelt wird.

6. Kraftfahrzeugleuchte nach einem der vorhergehenden Ansprüche,
**dadurch gekennzeichnet,**
**dass** die Abdeckung (06) gemeinsam mit der Lichtquelle (04) oder unabhängig von dieser in Richtung der Bewegungsbahn relativ zum Reflektor (02) beweglich angeordnet ist.

7. Kraftfahrzeugleuchte nach einem der vorhergehenden Ansprüche,
**dadurch gekennzeichnet,**
**dass** die Bewegungsbahn zumindest abschnittsweise entlang einer eine lokale Flächennormale einer durch die Aussparung (05) gebildeten Fläche umfassenden Geraden verläuft.

8. Kraftfahrzeugleuchte nach einem der vorhergehenden Ansprüche,
**gekennzeichnet durch**
einen Primärreflektor (09), der gemeinsam mit der Abdeckung (06) und der Lichtquelle (04) relativ zum Reflektor (02) beweglich angeordnet ist, wobei die Lichtquelle (04) zwischen Abdeckung (06) und Primärreflektor (09) angeordnet ist.

9. Kraftfahrzeugleuchte nach Anspruch 8,
**dadurch gekennzeichnet,**
**dass** der Primärreflektor (09) im zweiten Zustand zumindest mit seinem Rand bündig mit der Vorderseite (07) des die Aussparung (05) umgebenden Reflektors (02) abschließt oder der Primärreflektor (09) im zweiten Zustand die Aussparung (05) auf der der Lichtscheibe abgewandten Rückseite (10) des die Aussparung (05) umgebenden Reflektors (02) überdeckt und dabei einen die Aussparung (05) umgebenden Rand (08) des Reflektors (02) auf dessen Rückseite (10) überlappt.

10. Kraftfahrzeugleuchte nach einem der vorhergehenden Ansprüche,
**gekennzeichnet durch**
mindestens einen auf der Rückseite (11) der Abdeckung (06) vorgesehenen und von der Lichtquelle (04) abgestrahltes Licht in den die Aussparung (05) umgebenden Reflektor (02) reflektierenden Sekundärreflektor.

11. Kraftfahrzeugleuchte nach einem der vorhergehenden Ansprüche,
**gekennzeichnet durch**
mindestens eine LED (12) als Lichtquelle (04).

## Geänderte Patentansprüche

### Geänderte Patentansprüche gemäss Regel 137(2) EPÜ.

**1.** Kraftfahrzeugleuchte (01) mit einem von einem Leuchtengehäuse und einer Lichtscheibe umschlossenen Leuchteninnenraum, in dem wenigstens ein Reflektor (02) und ein Leuchtmittel (03) mit mindestens einer Lichtquelle (04) beherbergt sind, wobei in dem Reflektor (02) mindestens eine Aussparung (05) als Lampenloch für wenigstens eine Lichtquelle (04) des Leuchtmittels (03) vorgesehen ist,
**dadurch gekennzeichnet, dass**
- eine die durch die Aussparung (05) dem Reflektor (02) entnommene Fläche nachbildende Abdeckung (06) vorgesehen ist,
- die Lichtquelle (04) mit Blick auf die der Lichtscheibe zugewandte Vorderseite (07) des Reflektors (02) gesehen hinter der Abdeckung (06) angeordnet ist,
- zumindest die Abdeckung (06) in Richtung einer Bewegungsbahn zumindest zwischen einem einem Kaltzustand der Kraftfahrzeugleuchte (01) mit ausgeschaltetem Leuchtmittel (03) entsprechenden ersten Zustand und einem einem Warmzustand der Kraftfahrzeugleuchte (01) mit eingeschaltetem Leuchtmittel (03) entsprechenden zweiten Zustand relativ zum Reflektor (02) beweglich angeordnet ist, wobei
- in dem ersten Zustand die Abdeckung (06) die Aussparung (05) im Reflektor (02) abschließt, und
- in dem zweiten Zustand die Abdeckung (06) die Aussparung (05) freigibt und sich beim Blick auf die Vorderseite (07) des Reflektors (02) vor der vom Reflektor (02) begrenzten Aussparung (05) befindet.

**2.** Kraftfahrzeugleuchte nach Anspruch 1,
**dadurch gekennzeichnet,**
**dass** die Abdeckung (06) mit der durch die Aussparung (05) dem Reflektor (02) entnommene Fläche korrespondierend ausgebildet ist.

**3.** Kraftfahrzeugleuchte nach Anspruch 1 oder 2,
**dadurch gekennzeichnet,**
**dass** die Abdeckung (06) die durch die Aussparung (05) dem Reflektor (02) entnommene Fläche in Form, Funktion und Aussehen der Vorderseite (07) des Reflektors (02) nachbildet.

**4.** Kraftfahrzeugleuchte nach Anspruch 1, 2 oder 3,
**dadurch gekennzeichnet,**
**dass** in dem ersten Zustand die Abdeckung (06) die Aussparung (05) abschließt, indem sie bündig mit der Vorderseite (07) des die Aussparung (05) umgebenden Reflektors (02) abschließt oder indem sie die Aussparung (05) überdeckt und einen die Aussparung (05) umgebenden Rand (08) des Reflektors (02) überlappt.

**5.** Kraftfahrzeugleuchte nach einem der vorhergehenden Ansprüche,
**dadurch gekennzeichnet,**
**dass** die Lichtquelle (03) wenigstens einen zumindest eine Lichtaustrittsfläche aufweisenden Lichtaustrittsbereich mindestens eines Lichtleiters umfasst, in den im Warmzustand an mindestens einer von der Lichtauskoppelfläche verschiedenen Lichteinkoppelfläche eines Lichteinkoppelbereichs Licht eingekoppelt wird.

**6.** Kraftfahrzeugleuchte nach einem der vorhergehenden Ansprüche,
**dadurch gekennzeichnet,**
**dass** die Abdeckung (06) gemeinsam mit der Lichtquelle (04) oder unabhängig von dieser in Richtung der Bewegungsbahn relativ zum Reflektor (02) beweglich angeordnet ist.

**7.** Kraftfahrzeugleuchte nach einem der vorhergehenden Ansprüche,
**dadurch gekennzeichnet,**
**dass** die Bewegungsbahn zumindest abschnittsweise entlang einer eine lokale Flächennormale einer durch die Aussparung (05) gebildeten Fläche umfassenden Geraden verläuft.

**8.** Kraftfahrzeugleuchte nach einem der vorhergehenden Ansprüche,
**gekennzeichnet durch**
einen Primärreflektor (09), der gemeinsam mit der Abdeckung (06) und der Lichtquelle (04) relativ zum Reflektor (02) beweglich angeordnet ist, wobei die Lichtquelle (04) zwischen Abdeckung (06) und Primärreflektor (09) angeordnet ist.

**9.** Kraftfahrzeugleuchte nach Anspruch 8,
**dadurch gekennzeichnet,**
**dass** der Primärreflektor (09) im zweiten Zustand zumindest mit seinem Rand bündig mit der Vorderseite (07) des die Aussparung (05) umgebenden Reflektors (02) abschließt oder der Primärreflektor (09) im zweiten Zustand die Aussparung (05) auf der der Lichtscheibe abgewandten Rückseite (10) des die Aussparung (05) umgebenden Reflektors (02) überdeckt und dabei einen die Aussparung (05) umgebenden Rand (08) des Reflektors (02) auf dessen Rückseite (10) überlappt.

**10.** Kraftfahrzeugleuchte nach einem der vorhergehenden Ansprüche,
**gekennzeichnet durch**
mindestens einen auf der Rückseite (11) der Abdeckung (06) vorgesehenen und von der Lichtquelle (04) abgestrahltes Licht in den die Aussparung (05) umgebenden Reflektor (02) reflektierenden Sekundärreflektor.

**11.** Kraftfahrzeugleuchte nach einem der vorhergehenden Ansprüche,
**gekennzeichnet durch**
mindestens eine LED (12) als Lichtquelle (04).
